# EUROPEAN PATENT SPECIFICATION

(11) **EP 2 498 652 B1**
(45) Date of publication and mention of the grant of the patent: **23.10.2013**
(21) Application number: 10779635.1
(22) Date of filing: 11.11.2010
(51) Int. Cl.: A47J 43/28, A47G 19/22, A47J 31/44, A47G 21/00

(54) **ACCESSORY FOR BEVERAGE PREPARATION**
ZUBEHÖR ZUR GETRÄNKEHERSTELLUNG
ACCESSOIRE POUR PRÉPARATION DE BOISSON

(30) Priority: 12.11.2009 GB 0919851
(43) Date of publication of application: 19.09.2012
(73) Proprietor: Kraft Foods R & D, Inc., Northfield, IL 60093 (US)
(72) Inventor: CLARK, Jo-Ann, Boat of Garten Inverness-shire PH24 3BT (GB); YAUK, Kate Avrial, 81679 Munich (DE); HANSEN, Nick Andrew, Banbury Oxfordshire OX16 2QU (GB)
(74) Representative: Tucker, Nigel P.
(86) International application number: PCT/US2010/056343
(87) International publication number: WO 2011/060137

(56) References cited:
- AU-B3- 706 970
- DE-U- 1 709 327
- DE-U- 1 902 149
- DE-U1- 7 820 723
- GB-A- 953 151
- US-A- 4 126 164
- US-A- 5 150 803
- US-A1- 2006 196 966

## Description

The present invention relates to improvements in beverage preparation. In particular, the present invention relates to an accessory for use with beverage preparation, for example beverage preparation using a beverage preparation machine such as those that use pre-packaged containers of beverage ingredients.

For many years the methods of making coffee have been refined and skilled people have been trained to produce the best coffee beverages. The first coffee machines were developed in the early 1800s and an automatic espresso machine was invented in the 1930s. The automation of the coffee making process has, in turn, lead to a rapid growth, particularly in the last ten years, in the number of coffee houses/shops with more specialist drinks, such as espresso and cappuccino, being in high demand. These types of beverages have historically been regarded as luxury items because of the need for expensive, complex machines capable of making them, which had to be properly operated and maintained by a trained barista to produce good quality. Coffee aficionados agree that an espresso can be spoiled by a badly trained operator despite the use of a good quality machine and good quality coffee. This trend, however, has not only lead to an increased demand from consumers for luxury top quality beverages, but also a desire for a greater variety of speciality beverages, and the ability to make such beverages in the comfort of one's own home.

Although there is no agreed technical definition, it is generally understood that, compared to drip coffee, barista qualify espresso has a thicker consistency, due to a higher amount of dissolved solids and fine oil droplets suspended throughout the drink. It has a smooth, yet thick, dark reddish brown crema making up 10 to 30% of the beverage. The crema is a polyphasic emulsion of small air bubbles and the oils, proteins and sugars extracted from the coffee which is produced at a high pressure, traditionally in the region of 9 to 10 bar. The higher pressures increase the rate of coffee wetting and improve extraction as well as being responsible for the development of the crema.

It is acknowledged, by discerning espresso drinkers, that espresso produced using water which is cooler than the optimum temperature tastes sour and that produced with water which is hotter than this temperature tastes bitter. The optimum temperature is claimed to be between 92°C and 96°C. Other factors which affect the quality of the espresso include the roasting and age of the coffee beans, the grind size, the compaction of the grinds prior to brewing, and the brew time. The "best" espresso is achieved by balancing these key elements of the brewing process.

Domestic coffee machines have also developed significantly since the first falter machines were invented in the 1960s and coffee machines are now essential pieces of kitchen equipment in many households. These domestic coffee machines have been developed to try and emulate the high quality of coffee that may be obtained from specialist coffee houses, i.e. to provide barista quality coffee in the home.

Some such machines dispense individual servings of a beverage directly into a drinking receptacle, and derive the beverage from a bulk supply of beverage ingredients or from individual packages of beverage ingredient such as pods, pads or cartridges. In the following specification such packages will be referenced by the general term cartridges. Machines which use such cartridges eliminate the need for cleaning and provide an easy way for the user to make a selection of beverages. An example of one type of such cartridge is described in EP-A-1440903, and an example of a coffee machine for preparing beverages using this type of cartridge is described in EP-A-1440644. The beverages are made by brewing, mixing, dissolving or suspending the beverage ingredients in water. For example, for coffee beverages, heated water is forced through the cartridges to form the extracted solution. This solution is then delivered through an outlet nozzle to a receptacle placed directly below. The use of cartridges in such machines has become increasingly popular due to their convenience and the reproducible quality of the beverage produced.

As mentioned above, much effort has been directed to ensuring that the coffee produced by such machines is of the highest quality. In particular, attention has been paid to ensure barista quality espressos are produced that have the distinctive crema. EP-A-1440644, mentioned above, describes specially-designed cartridges that see the coffee passed through a narrow orifice provided in the cartridge to cause small air bubbles to become entrained in the coffee, thereby assisting in the formation of the crema.

However, provision of barista quality espresso requires not only the formation of the crema during preparation of the coffee beverage from the cartridge, but also requires the subsequent preservation of the crema. This has lead to the design of beverage machines to include tapering and/or shaped passages that seek to minimise any turbulence that may affect the flow of the beverage through the machine. It is recognised that turbulence in this flow causes the formation of larger air bubbles. These larger air bubbles are undesirable because they do not provide the consistency and texture of the desired crema: worse still, the larger air bubbles lead to a lack of stability in the crema leading to a collapse of the desired foam.

WO2007/008067 describes a beverage preparation machine for making coffee beverages that includes a receiving chamber for receiving the beverage to be dispensed. The receiving chamber includes a receiving body such that, as the beverage pours into the receiving chamber, the beverage pours onto and then over the receiving body. This inhibits the formation of foam. The receiving body is mushroom-shaped and housed internally, hence making it difficult to access for cleaning. Nonetheless, this arrangement attempts to preserve the quality of the beverage being dispensed by inhibiting turbulent flow of the beverage as it passes through the machine.

The present invention seeks to improve the beverage produced by current beverage preparation machines and, in particular, to ensure such a machine is capable of providing barista quality espresso.

The applicant has appreciated that efforts to date consider only the beverage preparation machine, and neglect to consider the final step of delivering the beverage: namely, the transfer of the beverage from the machine to a drinking receptacle. For example, the machine of WO2007/008067 goes to great length to ensure that a foam-free beverage is dispensed from its outflow opening. However, the beverage is then subjected to a sizeable drop into a receptacle that leads to turbulent mixing with the associated drawback of large air bubbles. DE 19 02 149 U discloses a similar shaped accessory for beverage preparation but for the purpose of bringing sugar into the beverage.

Thus, the applicant has sought to provide a simple and inexpensive way of improving the delivery of a beverage from the beverage reparation machine to a receptacle placed beneath an output nozzle of the beverage preparation machine.

Accordingly, the present invention provides an accessory for use with beverage preparation. The accessory may be suitable for use with a beverage preparation machine, for example a coffee machine. The accessory is sized and shaped so that it may be placed across a rim of a receptacle like a cup or mug that receives the beverage being dispensed, for example the beverage being dispensed by the beverage preparation machine. The accessory comprises first and second support surfaces for supporting the accessory when placed across the rim of the receptacle. The first and second support surfaces define a level, namely the horizontal during normal use. A beverage receiving surface extends between the first and second support surfaces. The beverage receiving surface is solid and provides a slope with respect to the level of the first and second support surfaces. The beverage receiving surface may receive the beverage being dispensed, for example by the beverage préparation machine, and the beverage may flow down the slope. The slope extends to meet a substantially upstanding portion of the accessory that extends from the beverage receiving surface to meet a lip. The lip provides the second support surface. Thus, the lip may be placed on the rim of the receptacle with the upstanding portion extending down into the receptacle.

The accessory may be positioned such that the upstanding portion abuts the inside of the receptacle with the junction between the slope and the upstanding portion being adjacent the side of the receptacle. This may be such that the aperture is immediately adjacent the inside wall of the receptacle (i.e. such that the lower part of the upstanding portion abuts the receptacle) or with a gap left between the aperture and the side wall of the receptacle. For example, an upper part of the upstanding portion may abut the receptacle and the upstanding portion may be angled so as to create a gap as it extends down into the receptacle. Optionally a projecting portion such as a dimple may be provided on the upstanding portion. This may provide a desired separation of aperture and side wall. Irrespective of the precise angle of the upstanding portion, such portion is of sufficient size and orientation to allow the lip and beverage receiving surface to rest stably on the receptacle when in use. Thus, the upstanding portion may extend substantially at a right angle to the level defined by the first and second support surfaces, or the upstanding portion may extend at an angle of between 70 and 85 degrees to the level defined by the first and second support surfaces. With such arrangements, the beverage may flow from the accessory onto the side of the receptacle.

In use, the receptacle is placed on a stand provided in the beverage preparation machine. The accessory is placed across that the receptacle, with the lip on the rim on one side of the receptacle and the accessory being supported at the other support surface by the other side of the rim. Thus, the accessory, extends across the receptacle and is positioned such that the beverage receiving surface is positioned beneath the outlet nozzle. As beverage is dispensed, it falls only a short distance to the accessory rather than the full height into the bottom of the receptacle. The beverage falls onto the beverage receiving surface which is angled, rather than the surface presented by the bottom of a receptacle. The beverage then flows down the slope to meet the side of the receptacle. The beverage may then flow down the side of the receptacle and fill the receptacle. Contact between the beverage and the accessory and then the receptacle ensures a slower flow of the beverage into the bottom of the receptacle.

As will be appreciated, despite the effectiveness of the accessory, the accessory takes a very simple form. This ensures that the accessory is easy to handle and to use successfully, and also ensures that the accessory is easy to keep clean. For example, as the accessory is separate from the beverage preparation machine, it is conveniently washed by hand or by an automatic dishwasher. Moreover, the simplicity of the accessory means it is easy to manufacture at low cost.

In addition, the utility of the accessory and its benefits have far wider applicability than merely its use with beverage preparation machines. As will be readily understood, the accessory may be used where a beverage is to be poured into a receptacle, and where control of a foam or bubbles is required. The foam may be created as the beverage is poured into the receptacle, or the foam may have been created prior to pouring. Consequently, the accessory may be instrumental in creating a desired quality of foam, or may be instrumental in preserving or enhancing a desired quality of foam. For example, the accessory may be used when pouring a beer, lager or similar into a glass or pitcher. This may be to the advantage of a consumer at home when pouring a beer, such as a stout, from a can or bottle. It is well known that the head produced in this situation is generally inferior to the head produced when the beverage is pulled in a pub or bar. Pouring carbonated drinks from a container such as a can or bottle may also benefit.

Preferably, an aperture is provided at or adjacent the junction of the beverage receiving surface and the upstanding portion. Beverage may flow through such an aperture and onto the inside of the receptacle. The aperture may extend through the upstanding portion, through the beverage receiving surface, or through both. The aperture may take any number of sizes. For example, the aperture may have a cross-sectional area of 25-100mm², or of 25-75mm², or of 40-60mm², or of 75-90mm². Cross-sectional areas of 85mm² and 46mm² have been found to work well.

The accessory may take many shapes and forms. In a contemplate arrangement, the accessory is elongate with a long body, akin to a spatula, that meets the upstanding portion that extends to form the lip. Such an accessory may be formed from a single piece of material, i.e. the material may be bent along two crease lines to form the upstanding portion and the lip. Thus, the lip may be placed on the lip of a receptacle with the upstanding portion running down the inside of the receptacle. The beverage receiving surface will extend upwardly back across the receptacle such that its underside provides the first support surface on the other side of the rim. The beverage may flow down the length of the beverage receiving surface where it meets the upstanding portion. The upstanding portion will block the path of the beverage such that it flows to either side and runs down the inside of the receptacle. The upstanding portion may be shaped to assist in guiding the beverage to the sides, e.g. the upstanding portion may present a convex face to the beverage flowing down the slope.

Optionally, an aperture may be provided at or adjacent the junction of the beverage receiving surface and the upstanding portion through which beverage may flow through and onto the inside of the receptacle. Also, the beverage receiving surface may be shaped to guide flow of the beverage down the slope and reduce flow of the beverage over the edge of the beverage receiving slope. For example, the beverage receiving surface may be dished to guide beverage towards the centre of the surface.

An alternative arrangement is disk-like such that it may cover the top of a receptacle. In this instance, one or more apertures may be provided at or adjacent the junction of the slope and the upstanding portion to allow the beverage to flow onto the inside of the receptacle. The disk-like accessory may be supported on the rim of the receptacle by a number of lips that rest on the rim, or by a single rim that extends around the circumference of the accessory. A single rim wold provide both the first and second support surfaces, i.e. the first and second support surfaces may be part of a continuous surface.

The extent of the beverage receiving surface may vary. In the arrangement described above comprising an elongate accessory, the beverage receiving surface extends so as to provide the first support surface on its underside. However, this need not be the case. Generally, the beverage receiving surface need only extend in a direction between the first and second supporting surfaces, but may terminate short of both the first and second support surfaces.

Contemplated arrangements include lips to provide both the first and second support surfaces, with a pair of unequal length upstanding portions between which the sloping beverage receiving surface extends. Other contemplated arrangements include providing a central vertex with slopes extending to either side. In an elongate accessory, this may see a central inverted v-shape to provide a pair of slopes both extending downwardly from the vertex to meet respective upstanding portions and lips. In a disk-like accessory, the central part may comprise an inverted cone that meets an encircling upstanding portion and lip.

The present invention also resides in apparatus for dispensing a beverage, comprising means for dispensing a beverage, such as a coffee machine or other beverage preparation machine, a drinking receptacle for receiving the beverage and an accessory. The receptacle has one or more side walls with a rim defining an opening through which the beverage is received. The accessory is positioned on the receptacle so as to be supported by the rim, and such that the accessory extends from one side of the receptacle to the other side of the receptacle. The accessory provides a sloping surface for receiving the beverage dispensed by the means for dispensing a beverage that slopes downwardly to terminate at or adjacent to a side wall of the receptacle.

The means for dispensing a beverage may be a vessel holding a beverage such as a jug, pitcher, can, jar, bottle, carton, sachet, cafetière, etc. Alternatively, the means for dispensing a beverage may be a drink dispenser, such as a beer pump for dispensing draught beers and the like, or a soda fountain. Moreover, the means for dispensing a beverage may be a beverage preparation machine such as a coffee machine. The beverage preparation machine may be adapted to receive beverage cartridges. The beverage preparation machine may have an outlet through which the beverage is dispensed and a stand underneath the outlet. The receptacle may be supported on the stand beneath the outlet, with the sloping surface of the accessory directly beneath the outlet. The accessory may correspond to the accessory described in any of the preceding paragraphs.

The present invention also resides in a method of preparing a beverage using means for dispensing a beverage such as a coffee machine or other beverage preparation machine, a drinking receptacle and an accessory. The method comprises placing the accessory on the drinking receptacle such that the accessory extends across the rim of the receptacle and presents a sloping surface for receiving the beverage, the sloping surface sloping towards an internal wall of the drinking receptacle. The accessory may be placed on the drinking receptacle before, after or as the drinking receptacle is placed on the stand. Next, the means for dispensing a beverage is caused to dispense the beverage such that the beverage falls onto the accessory, flows down the sloping surface and then down the internal wall of the drinking receptacle.

As noted above, the means for dispensing a beverage may be a vessel holding a beverage (e.g. a jug, pitcher, can, jar, bottle, carton, sachet, cafetière, etc.), a drink dispenser (e.g. a beer pump for dispensing draught beers and the like, or a soda fountain), or a beverage preparation machine (e.g. a coffee machine) . Where a beverage preparation machine is used, the method may comprise placing the drinking receptacle on a stand provided by the beverage preparation machine beneath a beverage outlet, and causing the beverage preparation machine to prepare and dispense the beverage through the beverage outlet. The accessory may correspond to the accessory described in any of the preceding paragraphs.

Preferred embodiments of the present invention will now be described, by way of example only, with reference to the accompanying drawings in which:
Figure 1 is a front perspective view of a prior art beverage preparation machine;
Figure 2 is a front perspective view of the machine of Figure 1 showing how a cartridge may be inserted;
Figure 3 is a rear elevation of the machine of Figures 1 with some parts omitted for clarity;
Figure 4 corresponds to Figure 1, and further includes a receptacle and an accessory according to a first embodiment of the present invention;
Figure 5 is a schematic representation that shows how the accessory of Figure 4 may be used;
Figure 6 is a plan view of the accessory of Figure 4;
Figure 7 is a longitudinal section through the accessory of Figure 4;
Figure 8 is a perspective view of an accessory according to a second embodiment of the present invention in place upon a receptacle;
Figure 9 is a plan view of the accessory of Figure 8;
Figure 10 is a longitudinal section through the accessory of Figure 8;
Figure 11 is a perspective view of an accessory according to a third embodiment of the present invention in place upon a receptacle;
Figure 12 is a plan view of the accessory of Figure 11;
Figure 13 is a diametric section through the accessory of Figure 11;
Figure 14 is a perspective view of an accessory according to a fourth embodiment of the present invention;
Figure 15 is a further perspective view of the accessory of Figure 14;
Figure 16 is a side view of the accessory of Figure 14;
Figure 17 is a perspective view of an accessory according to a fifth embodiment of the present invention;
Figure 18 is a further perspective view of the accessory of Figure 17; and
Figure 19 is a side view of the accessory of Figure 17.

As will be apparent from the foregoing, the present invention enjoys general application in all manner of beverage preparation. The accessory may be used in conjunction with pouring a beverage from a contained, such as a carton, bottle, can or the like, or can be used when a beverage is dispensed from a beverage preparation machine. The present invention provides particular benefit when used with coffee machines. As described above, it is particularly well suited for use with domestic cartridge-type coffee machines because the present invention fits well with the general aim of allowing a consumer to prepare barista quality coffees in a domestic setting with a minimum of required expertise and complex/expensive equipment.

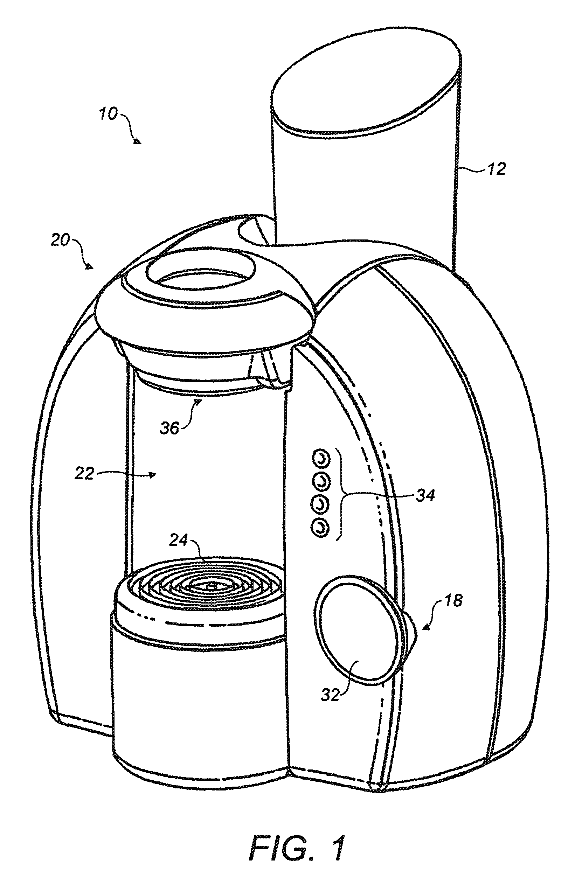

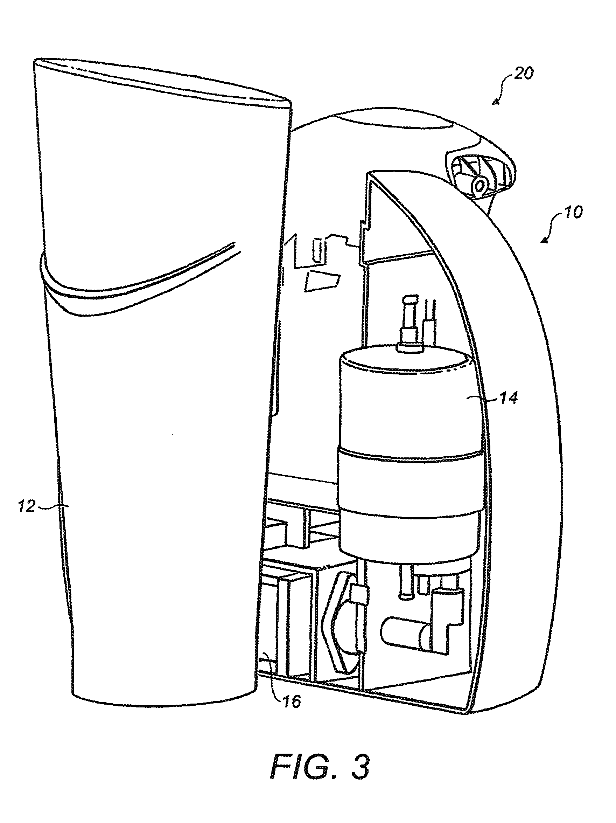

Consequently, the present invention will be described with reference to a known beverage preparation machine 10 which is illustrated in Figures 1 to 3 of the accompanying drawings. It will be understood, however, that the present invention finds application in a wide range of beverage preparation and in use with a wide range of beverage preparation machines including machines that may be capable of using a wide range of cartridges which, as noted above, include pods, pads, rigid and semi-rigid cartridges.

The beverage preparation machine 10 of Figures 1 to 3 generally comprises a tank 12, a water heater 14, a pump 16, a control processor (not shown), a user interface 18 and a cartridge head 20 for receiving a cartridge 50. The front of the beverage preparation machine 10 has a dispersing station 22 that includes a cupstand 24 for supporting a drinking receptacle 80 to be filled with beverage.

The tank 12 has an inlet for filling the tank 12 with water, or other liquid: although water is likely to be the most common liquid used in preparing beverages such as coffee, the machine 10 is also capable of handling other liquids, such as milk or milk preparations, for mixing with the beverage ingredients contained within the cartridge 50. Any references herein to water should also be taken to include any form of liquid used in preparing beverages. The tank 12 also incudes an outlet provided towards a lower end of the tank 12 which communicates with the pump 16. The pump 16 is operatively connected between the tank 12 and the water heater 14, and is controlled by the control processor. The water heater 14 is able to heat water received from the water pump 16 from a starting temperature of approximately 20°C to a nominal operating temperature of around 85°C in under 1 minute Water output from the heater 14 is fed via a suitable delivery system to the cartridge head 20. The cartridge head 20 generally comprises a cartridge holder 26 for holding, in use, a beverage cartridge 50 and cartridge recognition means 28. The cartridge head 20 further comprises inlet and outlet pierces 30 (only the outlet piercer is shown in the figures) for forming, in the beverage cartridge 50, an inlet for the heated water to enter the cartridge 50 and an outlet for the prepared beverage to exit the cartridge 50. The outlet may be in the form of a nozzle through which the prepared beverage flows to fall into the receptacle 80 placed on the cupstand 24.

Control of the brew cycle is effected by the control processor of the beverage preparation machine 10, which comprises a processing module and a memory. The control processor is operatively connected to, and controls operation of, the heater 14, pump 16, user interface 18, and other components. The operational behaviour of the machine 10 is determined by software ewabedded in the control processor, for example as described in EP-A-1440644. Briefly, the cartridge recognition means 28 allow the machine 10 to recognise the type of beverage cartridge 50 inserted in the cartridge holder 26, and to adjust one or more operational parameters accordingly. The variables for the operational parameters are stored in the memory.

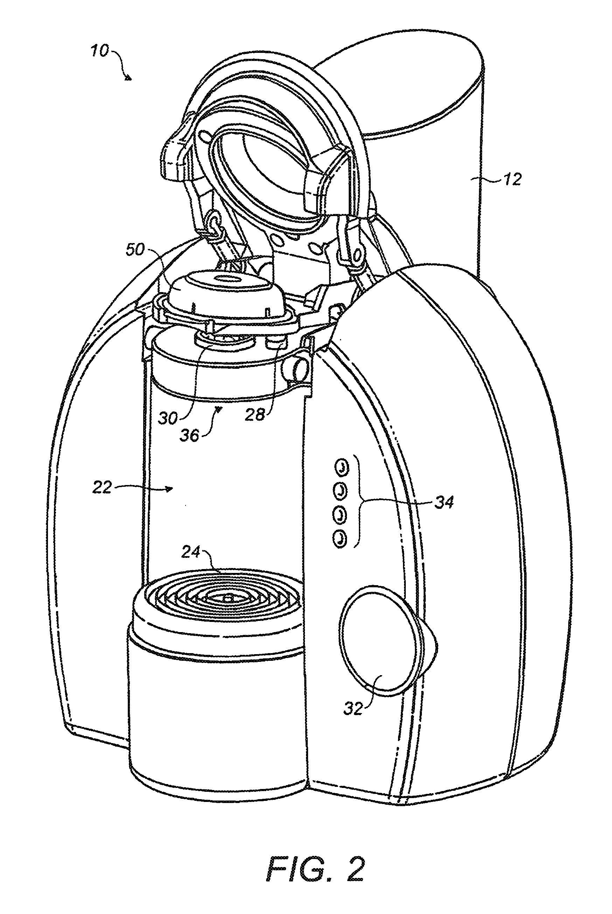

To prepare a beverage, a user places a drinking receptacle such as a cup onto the cupstand 24 and inserts a cartridge 50 into the cartridge holder 26, as best shown in Figure 2. During closure, the inlet and outlet piercers 30 pierce the cartridge 50. Preparation of the beverage is then started by the user operating a start/stop button 32 provided as part of the user interface 18 on the front of the machine 10. The user interface 18 may also comprise a number of status indicators 34. The cartridge recognition means 28 recognises the type of beverage cartridge 50 inserted, and the control processor performs the dispense cycle according to the operational parameters that correspond to that type of beverage cartridge 50. The cartridge 50 may comprise means for generating a desired foam, such as an air inlet and suitably arranged/sized conduits. The prepared beverage is dispensed from the cartridge 50 via the outlet 36, which may be directly from a nozzle provided as an outlet to the cartridge 50, or may be indirectly via a nozzle provided by the machine 10 that is in fluid communication with the outlet of the cartridge 50. Once the beverage has been dispensed, the cartridge holder 26 is opened once more and the used cartridge 50 removed.

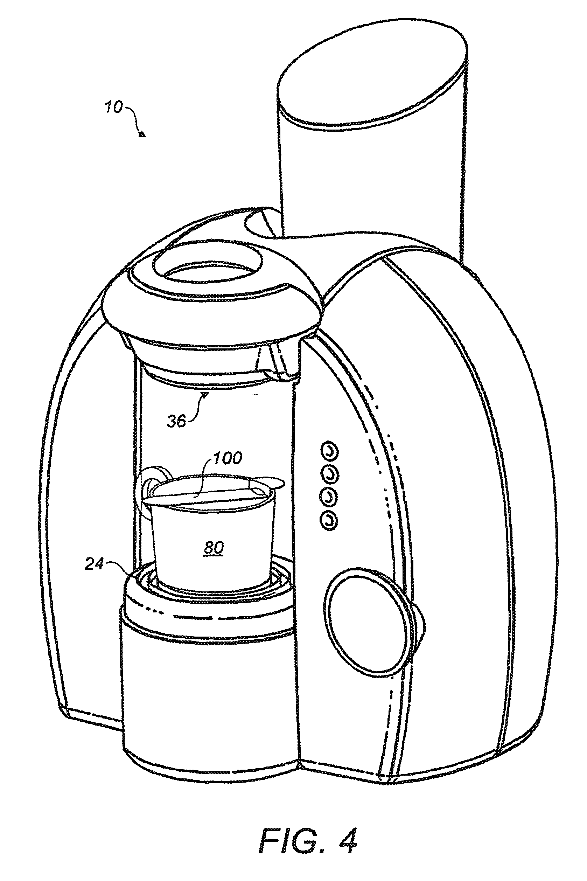

Traditionally, a receptacle 80 is placed beneath the outlet 36 on the cupstand 24. such that beverage dispensed by the beverage preparation machine 10 merely falls from the outlet 36 into the receptacle 80. Figure 4 shows a receptacle 80 in position on the cupstand 24, and also shows an accessory 100 that may be used to help maintain the quality of the beverage dispensed by the machine 10.

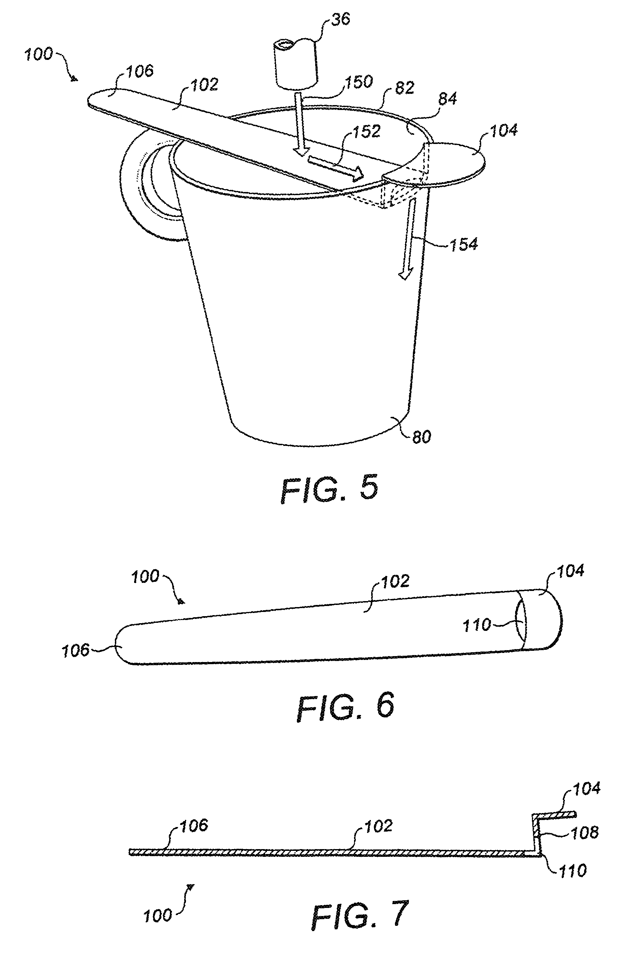

As can be seen more clearly from Figure 5, the accessory 100 comprises a long shaft 102 and has a raised lip 104 at one end. The end of the shaft 102 remote from the raised lip 104 provides a handle 106. The ends of the accessory 100 are rounded in this embodiment, although embodiments with square and/or bevelled corners are contemplated. The shaft 102 may be flat or may be curved. For example, the shat 102 may be curved about its longitudinal axis. The raised lip 106 extends from an upright portion 108 that connects the raised lip 104 to the shaft 102. The upright portion 108 is curved so as to follow a typical curve of the inside wall 84 of a receptacle 80. Alternatively, the upright portion 108 may be flat. An aperture 110 is provided in the accessory 100 at the junction of the shaft 102 and the upright portion 108, thereby expending across part of the shaft 102 and part of the upright portion 108. Alternatively, the aperture 110 may extend across just the shaft 102 or just the upright portion 108. The aperture 110 may be of any shape and may be located centrally or towards a side. More than one aperture 110 may be provided.

The accessory 100 may be made from any suitable material. For example, plastic, wood, metal and ceramic are all contemplated. In addition, the accessory 100 may be made from edible materials or may be coated with edible materials. For example, the accessory 100 may be made from chocolate, or may be provided with a chocolate or dried whisky coating. Where edible materials are used, a hot beverage may cause the material to melt or to dissolve into the beverage thereby imparting flavour to the beverage. The method of manufacture may be chosen to best suit the material chosen, e.g. injection moulding of plastic material or pressing of sheet metal.

In use, the accessory 100 is placed across the receptacle 80 such that the rim 82 of the receptacle 80 supports the raised lip 104 on one side and supports the handle 106 on the other side. The accessory 100 is ideally positioned such that the upright portion 108 rests close to but slightly spaced apart from the inside wall 84 of the receptacle 80, and such that the shaft 102 extends across the centre of the receptacle 80. This is to ensure the accessory 100 is beneath the outlet 36 of the beverage preparation machine 10. As indicated by arrow 150, beverage dispensed from the outlet 36 falls onto the shaft 102 of the accessory 100. The beverage will then flow down the shaft 102 as indicated by arrow 152 to meet the upright portion 108. The beverage will then flow through the aperture 110 and down the inside wall 84 of the receptacle 80, as indicated by arrow 154, to fill the receptacle 80.

As mentioned above, the shaft 102 may be curved such that the beverage is received on and flows down a concave surface. Making the shaft 102 concave about its length guides the beverage away from the edges of the shaft 102, and towards the centrally positioned aperture 110. Having a curved surface about the aperture 110 also helps in guiding beverage to the aperture such that it all drains away into the receptacle 80. A flat shaft 102 is also possible as any beverage flowing over the edge of the shaft 102 will tend to flow down the underside of the shaft 102 due to the Coanda effect. The beverage will then continue to flow along the underside of the shaft 102 and will be transferred to the inside wall 84 of the receptacle 80, and so then to flow down into the receptacle 80.

The size of the aperture 110 may be chosen to provide an acceptable flow rate of the beverage into the receptacle 80, and may be chosen to complement the flow rate of beverage being dispensed from a beverage preparation machine 10. Cross-sectional areas in the range 10-100mm² are considered useful, with 46mm² and 85mm² representing two good choices. However, the size and in fact the presence of an aperture 100 is not critical as beverage will tend to pool at the junction of the shaft 102 and the upright portion 108, and then flow over the edges and down the inside wall 84 of the receptacle 80 from either side of the accessory 100.

As will be appreciated, use of the accessory 100 reduces the height that the beverage falls when dispensed from the outlet 36. Without the accessory 100, the beverage will fall the full height into the bottom of the receptacle 80, where turbulent mixing will result that adversely affects the quality of the beverage (e.g. destroys the desired crema). The accessory 100 reduces turbulent mixing as a much reduced drop to an angled surface results. The angled surface provided by the shaft 102 encourages gentle flow of the beverage along its surface. The form of the accessary 100 then ensures a smooth transition from the shaft 102 to the inside wall 84 of the receptacle, where the beverage may then flow down the inside wall 84 into the bottom of the receptacle 80.

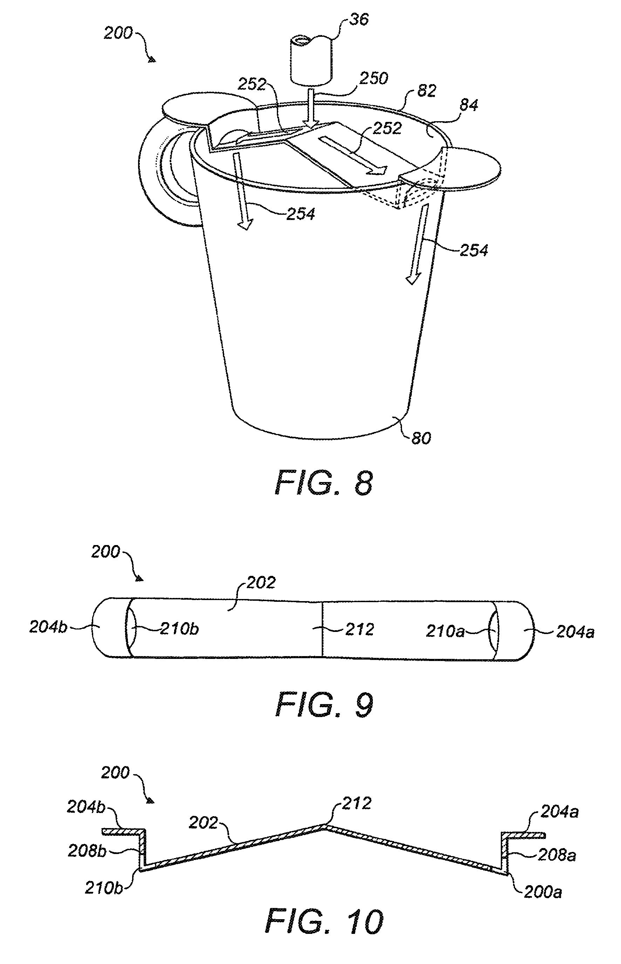

As described above, the accessory 100 may take many shapes and forms. Figures 8 to 19 illustrate but four of many further embodiments that are possible.

Figures 8 to 10 show a second embodiment of an accessory 200. The accessory 200 is generally w-shaped, and may be thought of as a double-ended version of the accessory 100 of Figures 4 to 7. The accessory 200 comprises a shaft 202 that is folded about its midpoint to form a central apex 212. Thus the shaft 202 extends downwardly from either side of the apex 212 to meet respective upright portions 208a and 208b. Respective raised lips 204a and 204b extend from the upright portions 208a and 208b. Apertures 210a and 210b are provided at the junctions of the shaft 202 and upright portions 208a and 208b.

In use, the accessory 200 is placed over a receptacle 80 such that the pair of raised lips 204a and 204b rest on opposite sides of the rim 82 of the receptacle 80. Ideally, the upright portions 208a and 208b abut against opposite sides of the inside wall 84 of the receptacle 80. The raised lips 204a and 204b may be made long (relative to the raised lip 204 of the accessory 100 of Figures 4 to 7) to allow the accessory 200 to be used with a greater range of sizes of receptacle 80. Beverage dispensed from the outlet 36 of the beverage preparation machine 10 drops onto the apex 212 of the accessory 200 as indicated by arrow 250. The beverage may then flow down the shaft 202 in both directions towards apertures 210a and 210b, as indicated by arrows 252. The beverage may then flow through the apertures 210a and 210b and down the inside wall 84 of the receptacle 80.

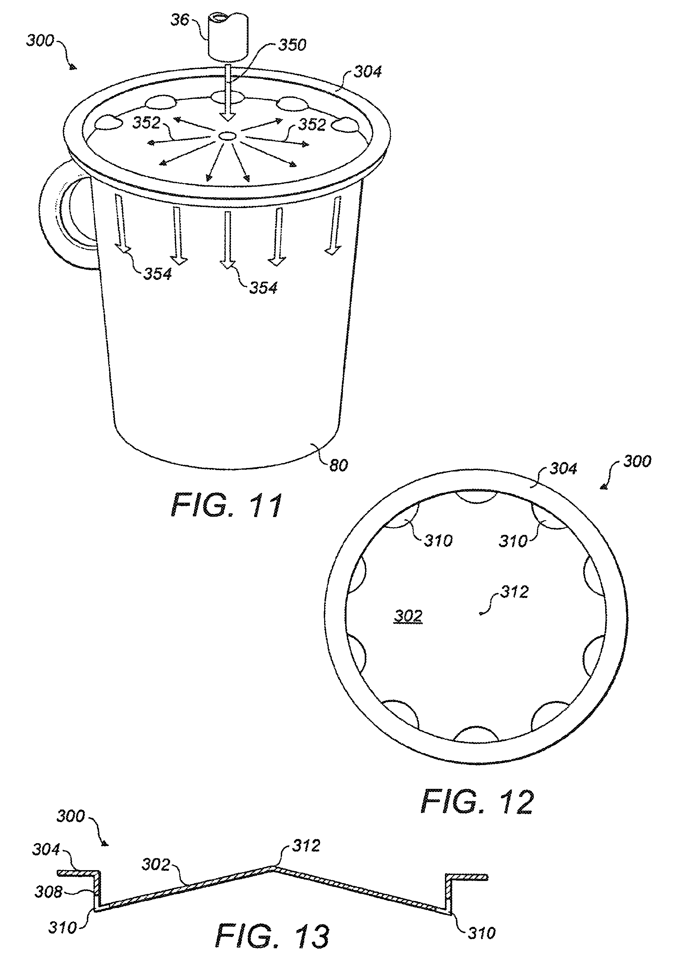

A third embodiment of an accessory 300 is shown in Figure 11 to 13. Rather than the elongate accessories 100 and 200 of Figures 4 to 10, accessory 300 is disk-like and so covers the receptacle 80. An annular lip 304 extends around the circumference of the accessory 300, and an upright wall 308 depends from the lip 304 to meet the base of a cone 302. Apertures 310 are positioned around the junction of the upright wall 308 and the cone 302. The number and size of the apertures 310 may be chosen as desired. The cone 302 is formed such that its apex 312 is central.

In use, the accessory 300 is placed on top of a receptacle 80 such that the annular lip 304 sits on the rim 82 of the receptacle 80, with the apex 312 beneath the outlet 36 of the beverage preparation machine 10. Beverage dispensed from the outlet 36 falls onto the cone 302, as indicated by arrow 350. The beverage will then run down the cone 302 in all directions to meet the upright wall 308, as indicated by arrows 352. The beverage will then flow through the apertures 310 and down the inside wall 84 of the receptacle 80, as indicated by arrows 354.

Many charges may be made to the form of the disk-like accessory 300. For example, rather than having a continuous lip 304 a number of discrete lips may be provided around the circumference of the accessory 300. For example, three or four equispaced lips may be provided to give the required support.. Also, instead of a largely solid cone 302, a spoked design may be used that sees spokes radiating out from a central apex 312. As an alternative to a central apex 312, the disk-like accessory 300 may have a slope from one side to the other. One or more apertures may be placed at the lowest point where the slope meets the upright wall 308.

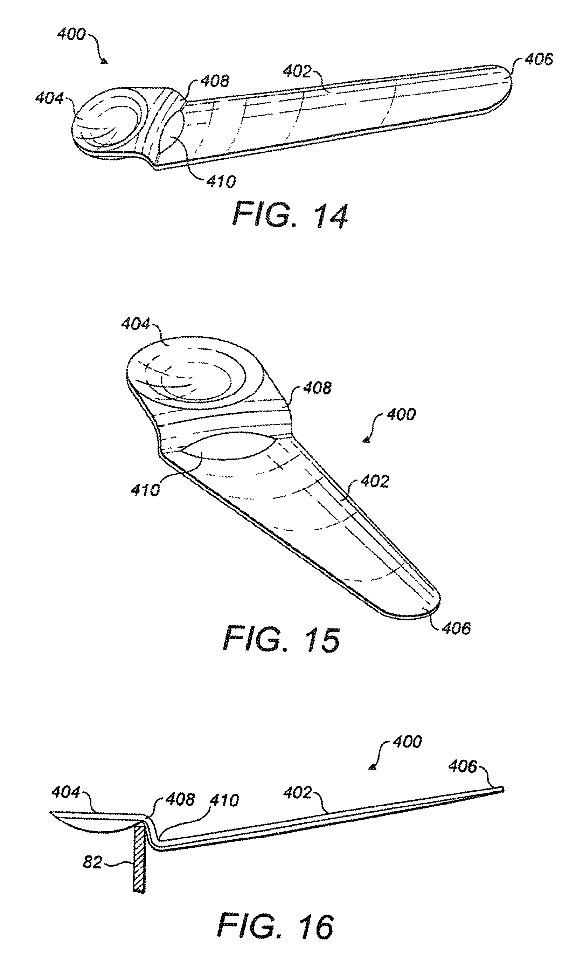

Figures 14 to 16 show a further embodiment of an accessory 400. The accessory is elongate with a shaft 402 and a raised lip 404. The shaft 402 is dished so as to guide beverage centrally along its length to the junction of the shaft 402 and the upright portion 408. An aperture 410 is provided centrally at this junction. The aperture 410 extends both up the upright portion 408 and back along the shaft 402.

The accessory 400 may be handled using the end of the shaft 402 as a handle 406 and using large dimple provided in the raised lip 404. In addition to providing a comfortable portion for a user to grip, the concave underside of the lip 404 aids in positioning the accessory 400 on a receptacle 80. The angle and length of the upright portion 408 may be chosen to provide a typical desired separation from the inside wall 84 of the receptacle 80, as shown in Figure 16 with the section of the receptacle side wall 82. Provision of a small gap between the aperture 410 and the inside wall 84 of the receptacle 80 has been found to improve the quality of the crema produced.

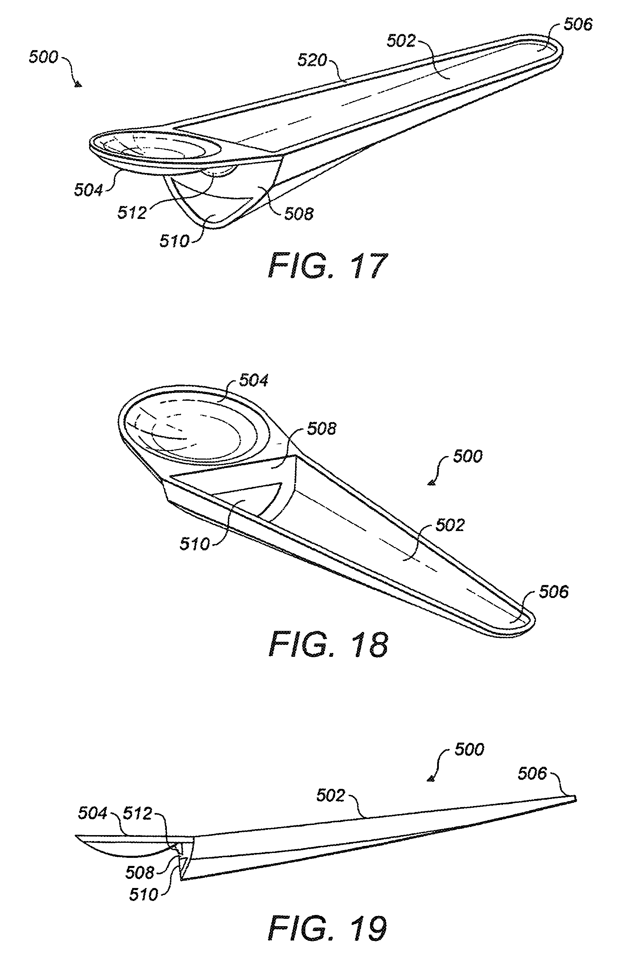

A yet further embodiment of an accessory 500 is shown in Figures 17 to 19. The accessory 500 is elongate with a shaft 502, an upright portion 508 and a raised lip 504. The lip 504 is similar to that of the accessory 400 of Figures 14 to 16 in that it is provided with a large concave dimple. Accessory 500 shows the inclusion of a feature that may be usefully included with any elongate design, namely an upstanding rim 520 around the edge of the shaft 502. The rim 520 prevents beverage spilling over the edge of the shaft 502, while a dish provided in the shaft 502 guides beverage to flow centrally down the shaft 502. A relatively large aperture 510 is provided in the upright portion 508. Larger apertures 510 are found to provide improved crema in curtain applications. As noted above, the aperture 510 may also extend back along the shaft 502, or just along the shaft 502.

A further feature is shown in Figures 17 to 19 that may be used with other accessories 100. This is the convex dimple 512 that extends from the upright portion 508 on the receptacle side . This dimple 512 is sized to create a projection such that when it abuts against the inside of the receptacle wall 84, a desired gap between the aperture 510 and the inside wall 84 results. Although a dimple is shown, other projecting shapes are of course possible.

Use of accessories such as those described above with the preparation of espresso coffee using a beverage preparation machine 10 like that shown in Figure 1 to 3 has been found to improve the quality of the crema produced. In particular, it has been found that the crema consists of smaller, tighter bubbles. In addition, the colour and uniformity of the crema is seen to improve.

As will be appreciated by those skilled in the art, many modifications may be made to the accessories described above without departing from the scope of the present invention, as defined by the appended claims.

## Claims

1. An accessory (100) for use with beverage preparation by placing the accessory across a rim (82) of a receptacle (80) that is adapted to receive the beverage being dispensed, the accessory comprising: first (106) and second (104) support surfaces for supporting the accessory when placed across the rim of the receptacle, the first and second support surfaces defining a level; and a beverage receiving surface (102) extending between the first and second support surfaces to provide a slope with respect to the level, the slope extending to meet an upstanding portion (108) that extends from the beverage receiving surface to meet a lip (104), the lip providing the second support surface.

2. The accessory of claim 1, wherein:
the upstanding portion extends substantially at a right angle to the level defined by the first and second support surfaces, or
the upstanding portion extends at an angle of between 70 and 85 degrees away from the level defined by the first and second support surfaces.

3. The accessory of any preceding claim, wherein the upstanding portion comprises a projection that projects outwardly beneath the lip.

4. The accessory of any preceding claim, wherein
an aperture is provided at or adjacent the junction of the beverage receiving surface and the upstanding portion, and
optionally, the aperture extends through the beverage receiving surface and the upstanding portion.

5. The accessory of claim 4, wherein the beverage receiving surface is curved across its width to form a concave beverage receiving surface.

6. The accessory of claim 4 or 5, wherein a rim projects upwardly from the edge of the beverage receiving surface.

7. The accessory of any preceding claim, wherein the upstanding portion is curved about an axis extending at a right angle to the level defined by the first and second support surfaces such that the beverage receiving surface slopes to meet a concave wall.

8. Apparatus for dispensing a beverage, comprising means for dispensing a beverage, a drinking receptacle and an accessory, wherein:
the receptacle has one or more side walls with a rim defining an opening through which the beverage may be received; and
the accessory is positioned on the receptacle so as to be supported by the rim with the accessory extending from one side of the receptacle to the other side of the receptacle and such that the accessory provides a sloping surface for receiving the beverage dispensed by the means for dispensing a beverage that slopes downwardly to terminate at or adjacent to a side wall of the receptacle.

9. The apparatus of claim 8, wherein the sloping surface slopes to meet an upright portion of the accessory that extends to meet a lip that rests on the rim of the receptacle, and wherein the junction of the sloping surface and the upright portion is positioned adjacent the side wall of the receptacle.

10. The apparatus of claim 8 or claim 9, wherein:
the accessory comprises an aperture at or adjacent the junction of the sloping surface and the upright portion,
and optionally either:
the aperture extends through the sloping surface and the upright portion,
or
the aperture is located within a concave portion of the sloping surface.

11. The apparatus of claims 8 to 10, wherein the means for dispensing a beverage is a beverage preparation machine comprising an outlet through which the beverage is dispensed and a stand underneath the outlet, the receptacle being supported on the stand beneath the outlet, and wherein the accessory is positioned such that the sloping surface is directly beneath the outlet.

12. A method of preparing a beverage using means for dispensing a beverage (10), a drinking receptacle (80) and an accessory (100), comprising:
placing the accessory (100) on the drinking receptacle (80) such that the accessory extends across the rim (80) of the receptacle and presents a sloping surface for receiving the beverage (102), the sloping surface sloping towards an internal wall (84) of the drinking receptacle (80); and
causing the means for dispensing a beverage to dispense the beverage such that the beverage is received by the sloping surface (102) of the accessory (100), flows down the sloping surface (102) and then down the internal wall (84) of the drinking receptacle (154).

13. The method of claim 12, comprising
placing the accessory on the drinking receptacle such that a raised lip of the accessory sits on the rim of the drinking receptacle, the accessory comprising an upright portion to link the sloping surface to the raised lip, and
optionally further comprising causing the means for dispensing a beverage to dispense the beverage such that the beverage flowing down the sloping surface of the accessory and through an aperture provided at or near the junction of the sloping surface and the upright portion.

14. The method of any of claims 12 or 13, wherein the means for dispensing a beverage is a beverage preparation machine, the method further comprising placing the drinking receptacle on a stand provided by the beverage preparation machine beneath a beverage outlet, and causing the beverage preparation machine to prepare the beverage and to dispense the beverage from the beverage outlet such that the beverage falls onto the sloping surface of the accessory, flows down the sloping surface and then down the internal wall of the drinking receptacle.

15. The method of claim 14, wherein the beverage preparation machine is configured to receive a beverage cartridge having foam generating means, and the method further comprises inserting the cartridge having foam generating means into the beverage preparation machine, and causing the beverage preparation machine to prepare the beverage using the cartridge with the foam generating means thereby to provide a flow of beverage with a foam that is dispensed by the beverage preparation machine and received by the accessory, and wherein the control of the flow of the beverage down the sloping surface of the accessory and down the internal wall of the drinking receptacle further controls foaming of the beverage.

## Patentansprüche

1. Zubehör (100) zur Verwendung bei der Getränkeherstellung durch Anordnen des Zubehörs quer über einem Rand (82) eines Gefäßes (80), das eingerichtet ist, um das Getränk aufzunehmen, das ausgegeben werden soll, wobei das Zubehör umfasst: erste (106) und zweite (104) Trägerflächen zum Tragen des Zubehörs wenn es quer über dem Rand des Gefäßes angeordnet ist, wobei die erste und zweite Trägerfläche ein Niveau definieren; und eine Getränkeaufnahmefläche (102), die sich zwischen der ersten und zweiten Trägerfläche erstreckt, um eine Neigung hinsichtlich des Niveaus bereitzustellen, wobei sich die Neigung erstreckt, um auf eine aufrechten Teil (108) zu treffen, der sich von der Getränkeaufnahmefläche erstreckt, um auf eine Lippe (104) zu treffen, wobei die Lippe die zweite Trägerfläche bereitstellt.

2. Zubehör nach Anspruch 1, worin:
der aufrechte Teil sich im Wesentlichen in einem rechten Winkel zu dem Niveau erstreckt, das durch die erste und zweite Trägerfläche definiert wird, oder
der aufrechte Teil sich in einem Winkel von zwischen 70 und 85 Grad weg von dem Niveau erstreckt, das durch die erste und zweite Trägerfläche definiert wird.

3. Zubehör nach einem der vorhergehenden Ansprüche, worin der aufrechte Teil einen Vorsprung umfasst, der nach außen unterhalb der Lippe ragt.

4. Zubehör nach einem der vorhergehenden Ansprüche, worin
eine Öffnung an der oder angrenzend an die Verbindungsstelle der Getränkeaufnahmefläche und des aufrechten Teils bereitgestellt wird, und
worin sich optional die Öffnung über die Getränkeaufnahmefläche und den aufrechten Teil erstreckt.

5. Zubehör nach Anspruch 4, worin die Getränkeaufnahmefläche über ihre Breite gewölbt ist, um eine konkave Getränkeaufnahmefläche bereitzustellen.

6. Zubehör nach Anspruch 4 oder 5, worin ein Rand nach oben von der Kante der Getränkeaufnahmefläche ragt.

7. Zubehör nach einem der vorhergehenden Ansprüche, worin der aufrechte Teil um eine Achse gewölbt ist, die sich in einem rechten Winkel zu dem Niveau erstreckt, das definiert wird durch die erste und zweite Trägerfläche, so dass die Getränkeaufnahmefläche geneigt ist, um auf eine konkave Wand zu treffen.

8. Vorrichtung zum Ausgeben eines Getränks, umfassend Mittel zum Ausgeben eines Getränks, ein Trinkgefäß und ein Zubehör, worin:
das Gefäß eine oder mehrere Seitenwände aufweist, mit einem Rand, der eine Öffnung definiert, durch welche das Getränk aufgenommen werden kann; und
das Zubehör auf dem Gefäß angeordnet ist, um von dem Rand getragen zu werden, wobei sich das Zubehör von einer Seite des Gefäßes zur anderen Seite des Gefäßes erstreckt und so dass das Zubehör eine geneigte Fläche bereitstellt zum Aufnehmen des durch das Mittel zum Ausgeben eines Getränks ausgegebenen Getränks, die sich nach unten neigt, um an oder angrenzend an einer Seitenwand des Gefäßes zu enden.

9. Vorrichtung nach Anspruch 8, worin die geneigte Fläche geneigt ist, um auf einen aufrechten Teil des Zubehörs zu treffen, der sich erstreckt, um auf eine Lippe zu treffen, die auf dem Rand des Gefäßes liegt, und worin die Verbindung der geneigten Fläche und des aufrechten Teils angrenzend an die Seitenwand des Gefäßes angeordnet ist.

10. Vorrichtung nach Anspruch 8 oder 9, worin:
das Zubehör eine Öffnung umfasst, an der oder angrenzend an die Verbindung der geneigten Fläche und des aufrechten Teils,
und worin optional:
entweder sich die Öffnung über die geneigte Fläche und den aufrechten Teil erstreckt
oder
die Öffnung innerhalb eines konkaven Teils der geneigten Fläche angeordnet ist.

11. Vorrichtung nach den Ansprüchen 8 bis 10, worin das Mittel zum Ausgeben eines Getränks eine Getränkezubereitungsvorrichtung ist, umfassend einen Auslass, durch welchen das Getränk ausgegeben wird, und einen Standplatz unterhalb des Auslasses, wobei das Gefäß auf dem Standplatz unterhalb des Auslasses getragen wird, und worin das Zubehör so angeordnet ist, dass die geneigte Fläche direkt unterhalb des Auslasses ist.

12. Verfahren zum Herstellen eines Getränks unter Verwendung von Mitteln (10) zum Ausgeben eines Getränks, ein Trinkgefäß (80) und ein Zubehör (100), umfassend:
Anordnen des Zubehörs (100) auf dem Trinkgefäß (80), so dass sich das Zubehör quer über den Rand (80) des Gefäßes erstreckt und eine geneigte Fläche (102) darstellt zur Aufnahme des Getränks, wobei die geneigte Fläche geneigt ist in Richtung einer inneren Wand (84) des Trinkgefäßes (80); und
Bewirken, dass das Mittel zum Ausgeben eines Getränks das Getränk ausgibt, so dass das Getränk von der geneigten Fläche (102) des Zubehörs (100) aufgenommen wird, die geneigte Fläche (102) und dann die innere Wand (84) des Trinkgefäßes (154) hinunterfließt.

13. Verfahren nach Anspruch 12, umfassend:
Anordnen des Zubehörs auf dem Trinkgefäß, so dass eine erhöhte Lippe des Zubehörs auf dem Rand des Trinkgefäßes aufliegt, wobei das Zubehör einen aufrechten Teil umfasst, um die geneigte Fläche mit der erhöhten Lippe zu verbinden, und
optional weiterhin umfassend Bewirken, dass das Mittel zum Ausgeben eines Getränks das Getränk ausgibt, so dass das Getränk die geneigte Fläche des Zubehörs und durch die Öffnung, die in oder nahe der Verbindung der geneigten Fläche und des aufrechten Teils bereitgestellt wird, hinunterfließt.

14. Verfahren nach einem der Ansprüche 12 oder 13, worin das Mittel zum Ausgeben eines Getränks eine Getränkezubereitungsvorrichtung ist, wobei das Verfahren weiterhin das Anordnen des Getränkegefäßes auf einem Standplatz, der von der Getränkezubereitungsvorrichtung unterhalb eines Getränkeauslasses bereitgestellt wird, und Bewirken, dass die Getränkezubereitungsvorrichtung das Getränk zubereitet und das Getränk ausgibt aus dem Getränkeauslass, so dass das Getränk auf die geneigte Fläche des Zubehörs fällt und dann die geneigte Fläche und dann die innere Wand des Trinkgefäßes hinunterfließt, umfasst.

15. Verfahren nach Anspruch 14, worin die Getränkezubereitungsvorrichtung konfiguriert ist, um eine Getränkekartusche mit Schaumerzeugungsmitteln aufzunehmen, und wobei das Verfahren weiterhin das Einbringen der Kartusche mit schaumerzeugendem Mittel in die Getränkezubereitungsvorrichtung umfasst, und Bewirken, dass die Getränkezubereitungsvorrichtung das Getränk zubereitet, unter Verwendung der Kartusche mit schaumerzeugendem Mittel, um einen Fluss von Getränk mit einem Schaum, das durch die Getränkezubereitungsvorrichtung ausgegeben wird und von dem Zubehör aufgenommen wird, vorzusehen, und worin die Steuerung des Flusses des Getränks die geneigte Fläche des Zubehörs hinunter und die inneren Wand des Trinkgefäßes hinunter weiterhin das Schäumen des Getränks steuert.

## Revendications

1. Accessoire (100) destiné à être utilisé avec une préparation de boisson en plaçant l'accessoire sur un rebord (82) d'un récipient (80) qui est adapté pour recevoir la boisson qui est distribuée, l'accessoire comprenant : des première (106) et deuxième (104) surfaces de support pour supporter l'accessoire lorsqu'il est placé sur le rebord du récipient, les première et deuxième surfaces de support définissant un niveau ; et une surface de réception de boisson (102) s'étendant entre les première et deuxième surfaces de support pour fournir une pente par rapport au niveau, la pente s'étendant pour rencontrer une partie verticale (108) qui s'étend à partir de la surface de réception de boisson pour rencontrer une lèvre (104), la lèvre fournissant la deuxième surface de support.

2. Accessoire de la revendication 1, dans lequel :
la partie verticale s'étend essentiellement à un angle droit par rapport au niveau défini par les première et deuxième surfaces de support, ou
la partie verticale s'étend à un angle compris entre 70 et 85 degrés par rapport au niveau défini par les première et deuxième surfaces de support.

3. Accessoire de l'une des revendications précédentes, dans lequel la partie verticale comprend une saillie qui fait saillie vers l'extérieur en-dessous de la lèvre.

4. Accessoire de l'une des revendications précédentes, dans lequel
une ouverture est prévue au niveau ou à proximité de la jonction de la surface de réception de boisson et de la partie verticale, et
éventuellement, l'ouverture s'étend à travers la surface de réception de boisson et la partie verticale.

5. Accessoire de la revendication 4, dans lequel la surface de réception de boisson est incurvée sur sa largeur pour former une surface de réception de boisson concave.

6. Accessoire de la revendication 4 ou 5, dans lequel un rebord fait saillie vers le haut à partir du bord de la surface de réception de boisson.

7. Accessoire de l'une des revendications précédentes, dans lequel la partie verticale est incurvée autour d'un axe s'étendant à un angle droit par rapport au niveau défini par les première et deuxième surfaces de support de sorte que la surface de réception de boisson s'incline pour rencontrer une paroi concave.

8. Appareil permettant de distribuer une boisson, comprenant un moyen destiné à distribuer une boisson, un récipient de boisson et un accessoire, dans lequel :
le récipient a une ou plusieurs paroi(s) latérale(s) avec un rebord définissant une ouverture à travers laquelle la boisson peut être reçue ; et
l'accessoire est placé sur le récipient de manière à être supporté par le rebord avec l'accessoire s'étendant d'un côté du récipient vers l'autre côté du récipient et de sorte que l'accessoire fournisse une surface en pente pour recevoir la boisson distribuée par le moyen de distribution de boisson qui s'incline vers le bas pour se terminer au niveau ou à proximité d'une paroi latérale du récipient.

9. Appareil de la revendication 8, dans lequel la surface en pente s'incline pour rencontrer une partie verticale de l'accessoire qui s'étend pour rencontrer une lèvre qui repose sur le rebord du récipient, et dans lequel la jonction de la surface en pente et de la partie verticale est positionnée de manière adjacente à la paroi latérale du récipient.

10. Appareil de la revendication 8 ou 9, dans lequel :
l'accessoire comprend une ouverture au niveau ou à proximité de la jonction de la surface en pente et de la partie verticale,
et, éventuellement, soit :
l'ouverture s'étend à travers la surface en pente et la partie verticale,
ou
l'ouverture est située à l'intérieur d'une partie concave de la surface en pente.

11. Appareil des revendications 8 à 10, dans lequel le moyen de distribution de boisson est une machine de préparation de boisson comprenant un orifice de sortie à travers lequel la boisson est distribuée et un support en-dessous de l'orifice de sortie, le récipient étant supporté sur le support en-dessous de l'orifice de sortie, et dans lequel l'accessoire est positionné de sorte que la surface en pente soit directement en-dessous de l'orifice de sortie.

12. Procédé de préparation d'une boisson en utilisant un moyen de distribution d'une boisson (10), un récipient de boisson (80) et un accessoire (100), comprenant le fait :
de placer l'accessoire (100) sur le récipient de boisson (80) de sorte que l'accessoire s'étende sur le rebord (80) du récipient et présente une surface en pente pour recevoir la boisson (102), la surface en pente s'inclinant vers une paroi interne (84) du récipient de boisson (80) ; et
d'amener le moyen de distribution d'une boisson à distribuer la boisson de sorte que la boisson soit reçue par la surface en pente (102) de l'accessoire (100), s'écoule vers le bas de la surface en pente (102) et ensuite vers le bas de la paroi interne (84) du récipient de boisson (154).

13. Procédé de la revendication 12, comprenant le fait de placer l'accessoire sur le récipient de boisson de sorte qu'une lèvre surélevée de l'accessoire se trouve sur le rebord du récipient de boisson, l'accessoire comprenant une partie verticale pour relier la surface en pente à la lèvre surélevée, et
éventuellement comprenant en outre le fait d'amener le moyen de distribution de boisson à distribuer la boisson de sorte que la boisson s'écoule vers le bas de la surface en pente de l'accessoire et à travers une ouverture prévue au niveau ou à proximité de la jonction de la surface en pente et de la partie verticale.

14. Procédé de l'une des revendications 12 ou 13, dans lequel le moyen de distribution de boisson est une machine de préparation de boisson, le procédé comprenant en outre le fait de placer le récipient de boisson sur un support fourni par la machine de préparation de boisson en-dessous d'un orifice de sortie de boisson, et d'amener la machine de préparation de boisson à préparer la boisson et à distribuer la boisson à partir de l'orifice de sortie de boisson de sorte que la boisson soit versée sur la surface en pente de l'accessoire, s'écoule vers le bas de la surface en pente et ensuite vers le bas de la paroi interne du récipient de boisson.

15. Procédé de la revendication 14, dans lequel la machine de préparation de boisson est configurée pour recevoir une cartouche de boisson ayant un moyen de génération de mousse, et le procédé comprend en outre le fait d'insérer la cartouche ayant un moyen de génération de mousse dans la machine de préparation de boisson, et d'amener la machine de préparation de boisson à préparer la boisson en utilisant la cartouche avec le moyen de génération de mousse ce qui permet de fournir un écoulement de boisson avec une mousse qui est distribuée par la machine de préparation de boisson et reçue par l'accessoire, et dans lequel la commande de l'écoulement de la boisson vers le bas de la surface en pente de l'accessoire et vers le bas de la paroi interne du récipient de boisson commande en outre le moussage de la boisson.
